(19) Europäisches Patentamt

European Patent Office

Office européen des brevets

(11) **EP 2 650 653 A2**

(12) **EUROPEAN PATENT APPLICATION**

(43) Date of publication:
**16.10.2013 Bulletin 2013/42**

(51) Int Cl.:
***G01D 5/22*** *(2006.01)*

(21) Application number: **13162874.5**

(22) Date of filing: **09.04.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **12.04.2012 JP 2012091183** | (71) Applicant: **JTEKT CORPORATION**<br>**Osaka-shi**<br>**Osaka 542-8502 (JP)**<br><br>(72) Inventor: **Ura, Noritake**<br>**Osaka-shi, Osaka 542-8502 (JP)**<br><br>(74) Representative: **Winter, Brandl, Fürniss, Hübner, Röss, Kaiser, Polte - Partnerschaft**<br>**Bavariaring 10**<br>**80336 München (DE)** |

(54) **Resolver**

(57)    A resolver according to the invention includes a stator provided with a plurality of teeth T1 to T12, and first to third phase output coils W1 to W3 wound around the teeth T1 to T12. When voltages induced in the first to third phase output coils W1 to W3 change based on rotation of a rotor, voltage signals corresponding to an electrical angle of the rotor are output from the output coils W1 to W3. One of the first to third phase output coils W1 to W3 is wound around each of the teeth T1 to T12. With respect to each of the phases, the distribution of the numbers of turns of each phase output coils, among the first to third phase output coils W1 to W3, is set to a sinusoidal distribution with respect to the electrical angle of the rotor.

Fig. 2B

EP 2 650 653 A2

**Description**

BACKGROUND OF THE INVENTION

1. Field of the Invention

The invention relates to a resolver that outputs multiple-phase voltage signals corresponding to a rotation angle of a rotor.

2. Description of Related Art

As a resolver of the above-mentioned type, for example, a variable reluctance (VR) resolver described in Japanese Patent Application Publication No. 2010-216844 (JP 2010-216844 A) has been known. The VR resolver described in JP 2010-216844 A includes a rotor made of a magnetic material, and a stator arranged so as to surround the rotor. Excitation coils and multiple-phase output coils are wound around multiple teeth of the stator. The rotor has described above a shape that gaps formed between the rotor and the teeth of the stator periodically change as the rotor rotates. In the VR resolver, because the gaps between the rotor and the teeth periodically change as the rotor rotates, voltages induced in the output coils change. As a result, a voltage signal, of which the amplitude changes sinusoidally according to the rotation angle of the rotor, is output from each phase output coil. This makes it possible to detect the rotation angle of the rotor based on the voltage signals output from the respective phase output coils.

In such a VR resolver, if output coils of two or more phases are wound around one tooth, the coil length of the outer output coil is longer than the coil length of the inner output coil. The direct current resistance of an output coil is proportional to the coil length. Therefore, if there is a difference in coil length between the respective phase output coils, a difference in output characteristics of the respective phase output coils is caused. However, in order to increase the accuracy of detection of the rotation angle of the rotor, it is desirable to make the output characteristics of the respective phase output coils identical with each other.

In view of this, as described in JP 2010-216844 A, in a resolver including two-phase output coils, for example, there has been proposed a configuration in which a stator is provided with four teeth arranged sequentially at intervals of 90° in the circumferential direction and output coils of one phase are respectively wound around a pair of teeth opposed to each other. With this configuration, it is possible to make the coil lengths of the respective phase output coils equal to each other, thereby making it possible to easily make the direct current resistances of the output coils equal to each other. Therefore, the output characteristics of the respective phase output coils are easily made identical with each other. As a result, the accuracy of detection of the rotation angle of the rotor improves.

In a case where a shaft angle multiplier is set to 2X or larger in the VR resolver described in JP 2010-216844 A, it is necessary to form teeth in the stator at intervals of 90° in electrical angle of the rotor. Note that the shaft angle multiplier indicates a multiplying factor of a voltage signal output from each output coil, in other words, a multiplying factor used to obtain an electrical angle of the rotor from a mechanical angle of the rotor. Accordingly, for example, in a case where the shaft angle multiplier is set to 5X, it is necessary to form twenty teeth in the stator. In this case, because the interval between teeth needs to be small, manufacturing of the stator may become difficult. Such a problem becomes more conspicuous as the shaft angle multiplier is set to a larger value.

SUMMARY OF THE INVENTION

The invention provides a resolver that is configured such that a shaft angle multiplier is set to 2X or larger, that is able to detect an electrical angle of a rotor with high accuracy, and that is configured to allow easy manufacturing of a stator.

According to a feature of an example of the invention, in a resolver including a stator that surrounds a rotor and that is provided with a plurality of teeth, and multiple phase output coils that are wound around the teeth, the resolver being configured such that voltages induced in the respective phase output coils change due to changes in magnetic fluxes applied to the multiple phase output coils based on rotation of the rotor, voltage signals corresponding to an electrical angle of the rotor are output from the multiple phase output coils, and a shaft angle multiplier is set to 2X or more, one of the multiple phase output coils is wound around each of the teeth; and with respect to each of the phases, a distribution of the numbers of turns of each phase output coils for the corresponding teeth is a sinusoidal distribution with respect to the electrical angle of the rotor.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a plan view illustrating the schematic configuration of a VR resolver according to a first embodiment of the invention;
FIG. 2A is a graph illustrating the relation among the numbers of turns of first to third phase output coils for corresponding teeth, electrical angles of a rotor, and positions of the teeth in the VR resolver according to the first embodiment;
FIG. 2B is a graph illustrating the relation between the numbers of turns of the first phase output coils for the corresponding teeth and the electrical angles of the rotor;

FIG. 3 is a circuit diagram illustrating an equivalent circuit of the VR resolver according to the first embodiment;

FIG. 4 is a plan view illustrating the schematic configuration of a VR resolver according to a second embodiment of the invention;

FIG. 5A is a graph illustrating the relation among the numbers of turns of first and second phase output coils for the corresponding teeth, the electrical angles of the rotor, and the positions of the teeth in the VR resolver according to the second embodiment;

FIG. 5B is a graph illustrating the relation between the numbers of turns of the first phase output coils for the corresponding teeth and the electrical angles of the rotor;

FIG. 6 is a circuit diagram illustrating an equivalent circuit of the VR resolver according to the second embodiment;

FIG. 7 is a plan view illustrating the schematic configuration of a VR resolver according to a third embodiment of the invention;

FIG. 8A is a graph illustrating the relation among the numbers of turns of first to third phase output coils for the corresponding teeth, the electrical angles of the rotor, and the positions of the teeth in the VR resolver according to the third embodiment;

FIG. 8B is a graph illustrating the relation between the numbers of turns of the first phase output coils for the corresponding teeth and the electrical angles of the rotor;

FIG. 9 is a plan view illustrating the schematic configuration of a VR resolver according to a fourth embodiment of the invention;

FIG. 10A is a graph illustrating the relation among the numbers of turns of first to third phase output coils for the corresponding teeth, the electrical angles of the rotor, and the positions of the teeth in the VR resolver according to the fourth embodiment; and

FIG. 10B is a graph illustrating the relation between the numbers of turns of the first phase output coils for the corresponding teeth and the electrical angles of the rotor.

DETAILED DESCRIPTION OF EMBODIMENTS

Hereinafter, embodiments of the invention will be described with reference to the accompanying drawings.

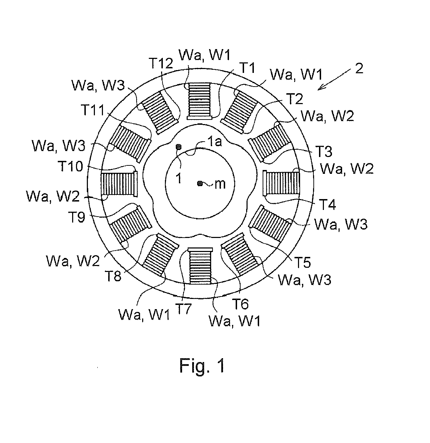

A variable reluctance (VR) resolver of one-phase excitation and three-phase output, in which a shaft angle multiplier is set to 5X, according to a first embodiment of the invention will be described below with reference to FIG. 1 to FIG. 3.

As illustrated in FIG. 1, the VR resolver includes a rotor 1 made of a magnetic material, and a stator 2 arranged so as to surround the rotor 1. Five salient pole portions (bulge portions) are formed on an outer peripheral face of the rotor 1 to set the shaft angle multiplier to 5X. A fitting hole 1a into which a rotary shaft, which is a detection target, is fitted is formed in a center portion of the rotor 1. The rotor 1 rotates about a central axis m together with the rotary shaft fitted in the fitting hole 1a.

The stator 2 is arranged such that its central axis coincides with the central axis m of the rotor 1. On an inner peripheral face of the stator 2, twelve teeth T1 to T12 are sequentially formed equiangularly in the circumferential direction so as to project toward the rotor 1. That is, the teeth T1 to T12 are arranged at intervals of 30° in mechanical angle of the rotor 1, in other words, at intervals of 150° in electrical angle of the rotor 1. An excitation coil Wa and a corresponding one of first to third phase output coils W1 to W3 are wound around each of the teeth T1 to T12 as described in (a1) to (a4) below.

    (a1) The excitation coil Wa is wound around each of all the teeth T1 to T12.
    (a2) The first phase output coil W1 is wound around each of the teeth T1, T2, T7, T8.
    (a3) The second phase output coil W2 is wound around each of the teeth T3, T4, T9, T10.
    (a4) The third phase output coil W3 is wound around each of the teeth T5, T6, T11, T12.

As described above, in the present embodiment, the excitation coil Wa and one of the first to third phase output coils W1 to W3 are wound around each of the teeth T1 to T12. Note that the coils having the same phase and wound around the corresponding teeth are electrically connected in series.

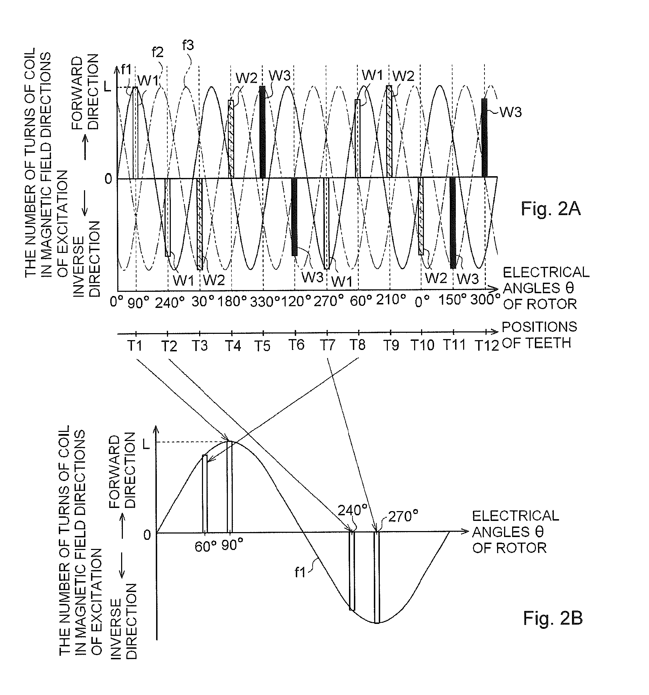

In the present embodiment, the numbers of turns of the first to third phase output coils W1 to W3 for the corresponding teeth T1 to T12 are set as illustrated in FIG. 2A. FIG. 2A illustrates the relation among the numbers of turns of the output coils in the magnetic field directions of excitation of the excitation coil Wa, electrical angles θ of the rotor 1, and positions of the teeth. In FIG. 2A, the ordinate axis represents the number of turns of the output coil and the abscissa axis represents the electrical angle θ of the rotor 1 and the positions of the teeth. Note that, in FIG. 2A, a first sine function f1 (= L·sinθ) that changes sinusoidally is illustrated by a continuous line. The number of turns L is the amplitude of the sine wave and one rotation of the rotor 1 in electrical angle θ is one period of the sine wave. A second sine function f2 (= L·sin(θ - 120°)) of which the phase is delayed from the phase of the first sine function f1 by 120° in electrical angle θ is illustrated by an alternate long and short dash line. A third sine function f3 (= L·sin(θ - 240°)) of which the phase is delayed from the phase of the first sine function f1 by 240° in electrical angle θ is illustrated by an alternate long and two short dashes line.

As illustrated in FIG. 2A, the teeth T1, T2, T7, T8 around which the first phase output coils W1 are wound are located at positions corresponding to 90°, 240°, 270°, 60° in electrical angle of the rotor 1, respectively. Further, in the present embodiment, the numbers of turns of the first phase output coils W1 for the teeth T1, T2, T7, T8 are set to the respective numbers illustrated by hollow bars in FIG. 2A based on the positions of the teeth with respect to the electrical angle of the rotor 1, according to the first sine function f1. That is, the numbers of turns of the first phase output coils W1 for the teeth T1, T2, T7, T8 are set as described in (b1) to (b4) below.

(b1) The number of turns for the tooth T1 is set to "L (= L·sin (90°))."
(b2) The number of turns for the tooth T2 is set to " L (=L·sin (240°)."
(b3) The number of turns for the tooth T7 is set to "L (= sin (270°))."
(b4) The number of turns for the tooth T8 is set to " L (=L·*sin (60°))."

Accordingly, as illustrated in FIG. 2B, the distribution of the numbers of turns of the first phase output coils W1 for the teeth T1, T2, T7, T8 is a sinusoidal distribution with respect to the electrical angle of the rotor 1.

Further, as illustrated in FIG. 2A, the numbers of turns of the second phase output coils W2 are set to the respective numbers illustrated by hatched bars in FIG. 2A based on the positions of the teeth T3, T4, T9, T10 with respect to the electrical angle of the rotor 1, according to the second sine function f2. Further, the numbers of turns of the third phase output coils W3 are set to the respective numbers illustrated by solid bars in FIG. 2A based on the positions of the teeth T5, T6, T11, T12 with respect to the electrical angle of the rotor 1, according to the third sine function f3.

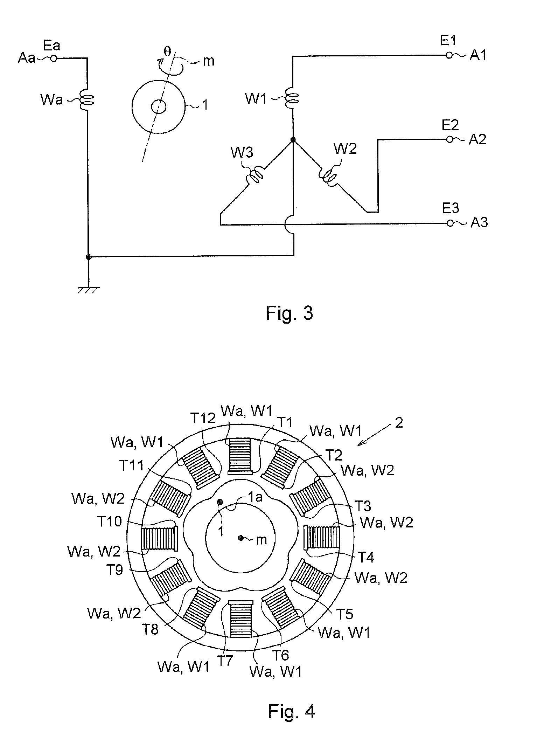

Next, description will be provided on the electrical configuration of the VR resolver according to the present embodiment and an example of the operation of the VR resolver with reference to FIG. 3. As illustrated in FIG. 3, in the VR resolver, one end of the excitation coil Wa is connected to a feed terminal Aa and the other end thereof is grounded. Further, the first to third phase output coils W1 to W3 are connected at one ends to output terminals A1 to A3, respectively, and are grounded at the other ends.

In the VR resolver, when an alternating voltage Ea (= E·sin (ωt) ) is applied to the feed terminal Aa, an alternating field is generated by the excitation coil Wa. Note that "E" denotes the amplitude of the alternating voltage Ea, "ω" denotes the excitation angular frequency, and "t" denotes time. The alternating field is applied to the first to third phase output coils W1 to W3 through a magnetic path formed between the rotor 1 and each of the teeth T1 to T12.

At this time, magnetic fluxes that are applied to the first to third phase output coils W1 to W3 change according to gaps between the rotor 1 and the respective teeth T1 to T12. Therefore, in the first to third phase output coils W1 of W3, voltages corresponding to the gaps between the rotor 1 and the respective teeth T1 to T12 are induced by an electro-magnetic induction effect. Further, when the rotor 1 rotates, the gaps between the rotor 1 and the respective teeth T1 to T12 periodically change. As a result, in each of the first to third phase output coils W1 to W3, a voltage of which the amplitude component periodically changes according to the electrical angle θ of the rotor 1 is induced.

The magnitude of the voltage induced in each of the first to third phase output coils W1 to W3 is proportional to the number of turns of the coil for the corresponding tooth. In view of this, if the numbers of turns of the first to third phase output coils W1 to W3 are set as illustrated in FIG. 2A, the composite voltage of induced voltages generated at portions of the output coils of the same phase, among the first to third phase output coils W1 to W3, wound around the corresponding teeth is changed sinusoidally with one rotation of the rotor 1 in electrical angle used as one period of the sine wave. Accordingly, first to third voltage signals E1 to E3 as described in (c1) to (c3) below are output from the output terminals A1 to A3, respectively. Note that "K" denotes the voltage transformation ratio between the excitation coil Wa and each of the first to third phase output coils W1 to W3.

$$(c1)\ E1 = K \cdot Ea \cdot \sin\theta$$
$$= (K \cdot E \cdot \sin\theta) \cdot \sin(\omega t)$$

$$(c2)\ E2 = K \cdot Ea \cdot \sin(\theta - 120°)$$
$$= (K \cdot E \cdot \sin(\theta - 120°)) \cdot \sin(\omega t)$$

$$(c3)\ E3 = K \cdot Ea \cdot \sin(\theta - 240°)$$
$$= (K \cdot E \cdot \sin(\theta - 240°)) \cdot \sin(\omega t)$$

As described above, the amplitude components of the first to third voltage signals E1 to E3 output from the output terminals A1 to A3, respectively, change sinusoidally with one rotation of the rotor 1 in electrical angle θ used as one period of the sine wave, and exhibit waveforms of which the phases are offset from each other by 120° in electrical angle θ. Therefore, as is well known, if the amplitude components of the first to third voltage signals E1 to E3 are extracted and an arc tangent value is calculated based on the amplitude components thus extracted, it is possible to obtain the electrical angle θ of the rotor 1 with high accuracy.

In a case where a VR resolver in which the number of output phases is set to three is manufactured based on the structure of the VR resolver described in JP 2010-216844 A, it is necessary to form teeth at intervals of 60° in electrical angle of the rotor 1. In order to set the shaft angle multiplier to 5X in such a VR resolver, it is necessary to form thirty teeth in the stator 2. This makes the structure of the stator complicated. As a result, manufacturing of the stator may become difficult.

However, in the VR resolver according to the present embodiment, it is possible to set the number of teeth to twelve as illustrated in FIG. 1 while setting the number of output phases to three and setting the shaft angle multiplier to 5X. Therefore, it is possible to significantly reduce the number of teeth. This makes it possible to easily manufacture the stator 2.

Further, in the present embodiment, because an output coil wound around each of the teeth T1 to T12 is only one of the first to third phase output coils W1 to W3, it is possible to make the coil lengths of the output coils wound around the respective teeth equal to each other. As a result, it is possible to easily make the direct current resistances of the first to third phase output coils W1 to W3 identical with each other, thereby making it possible to easily make the output characteristics of the first to third phase output coils W1 to W3 identical with each other. Accordingly, the accuracy of detection of the electrical angle of the rotor 1 improves.

If the central axis of the stator 2 is offset from the central axis of the rotor 1 during assembly of the resolver, gaps between the respective teeth T1 to T12 and the rotor 1 differ from each other. In this case, because the magnitude of magnetic flux applied to each output coil varies depending on the size of a gap, the voltage induced in each output coil varies depending on the position of the tooth. If the voltage induced in each output coil varies depending on the position of the tooth, the output characteristics of the first to third phase output coils W1 to W3 differ from each other. Consequently, the accuracy of detection of the electrical angle of the rotor 1 may decrease.

However, in the present embodiment, the winding positions of the first phase output coils W1, the winding positions of the second phase output coils W2, and the winding positions of the third phase output coils W3 are each dispersed in the circumferential direction of the rotor 1 as illustrated in FIG. 1. Therefore, even if the central axis of the rotor 1 and the central axis of the stator 2 are offset from each other, some of the output coils of one phase are at the positions close to the rotor 1 and the remaining output coils of the one phase are at the positions distant from the rotor 1. More specifically, if the central axis of the rotor 1 is offset from the central axis of the stator toward the teeth T1, T2, the first phase output coils W1 wound around the teeth T1, T2, among all the first phase output coils W1, come close to the rotor 1 while the remaining first phase output coils W1 wound around the teeth T7, T8 move away from the rotor 1.

Therefore, an induced voltage larger than that in normal times is generated in the first phase output coils W1 wound around the teeth T1, T2 and an induced voltage smaller than that in normal times is generated in the remaining first phase output coils W1 wound around the teeth T7, T8. Accordingly, in the first phase output coils W1 as a whole, it is possible to cancel out the variation in induced voltage depending on the positions of the teeth. Further, the same effect is obtained in the second phase output coils W2 and the third phase output coils W3. Accordingly, output characteristics of the first to third phase output coils W1 to W3 are easily made identical with each other. As a result, the accuracy of detection of the rotation angle of the rotor 1 improves.

As described above, with the VR resolver according to the present embodiment, the following effects are obtained.

(1) One of the first to third phase output coils W1 to W3 is wound around each of the teeth T1 to T12. Further, the distribution of the numbers of turns of the first phase output coils W1 for the teeth T1, T2, T7, T8, the distribution of the numbers of turns of the second phase output coils W2 for the teeth T3, T4, T9, T10, and the distribution of the numbers of turns of the third phase output coils W3 for the teeth T5, T6, T11, T12 each are a sinusoidal distribution with respect to the electrical angle of the rotor 1. Thus, even when the number of output phases is set to three and the shaft angle multiplier is set to 5X, it is possible to significantly reduce the number of teeth. As a result, manufacturing of the stator 2 becomes easy. Further, it is also possible to secure the accuracy of detection of the electrical angle of the rotor 1.

(2) The winding positions of the first phase output coils W1 for the teeth T1, T2, T7, T8, the winding positions of the second phase output coils W2 for the teeth T3, T4, T9, T10, and the winding positions of the third phase output coils W3 for the teeth T5, T6, T11, T12 each are dispersed in the circumferential direction of the rotor 1. Accordingly, even if the central axis of the stator 2 is offset from the central axis of the rotor 1, it is possible to cancel out the variation in induced voltage depending on the positions of the teeth. Therefore, it is possible to easily make the output characteristics of the first to third phase output coils W1 to W3 identical with each other. This makes it possible to improve the accuracy of detection of the electrical angle of the rotor 1.

Next, description will be provided on a VR resolver of one-phase excitation and two-phase output, in which the shaft angle multiplier is set to 5X, according to a second embodiment of the invention, with reference to FIG. 4 to FIG. 6. The differences from the first embodiment will be mainly described below.

As illustrated in FIG. 4, in the VR resolver according to the present embodiment, a corresponding one of the first phase output coil W1 and the second phase output coil W2 is wound around each of the teeth T1 to T12 as described in (d1), (d2) below.

(d1) The first phase output coil W1 is wound around each of the teeth T1, T2, T6 to T8, T12.
(d2) The second phase output coil W2 is wound around each of the teeth T3 to T5, T9 to T11.

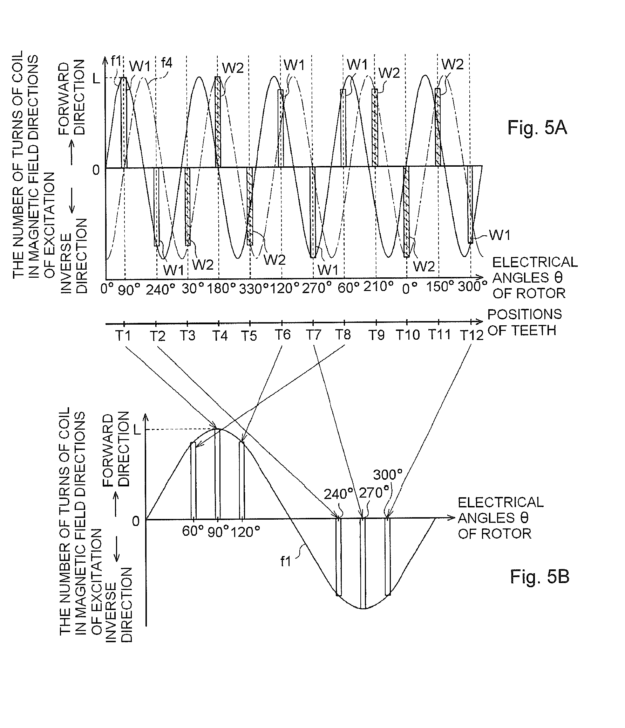

As described above, in the present embodiment, the excitation coil Wa and one of the first phase output coil W1 and the second phase output coil W2 are wound around each of the teeth T1 to T12. The numbers of turns of the first and second phase output coils W1, W2 for the teeth T1 to T12 are set as illustrated in FIG. 5A. FIG. 5A illustrates the relation among the numbers of turns of the output coils in the magnetic field directions of excitation of the excitation coil Wa, electrical angles $\theta$ of the rotor 1, and positions of the teeth. In FIG. 5A, the ordinate axis represents the number of turns of the output coil and the abscissa axis represents the electrical angle $\theta$ of the rotor 1 and the positions of the teeth. Note that, in FIG. 5A, the first sine function f1 exemplified in FIG. 2A is illustrated by a continuous line. Further, a fourth sine function f4 (= $L \cdot \sin(\theta - 90°)$) of which the phase is delayed from the phase of the first sine function f1 by 90° in electrical angle $\theta$ is illustrated by an alternate long and short dash line.

In the present embodiment, as illustrated in FIG. 5A, the numbers of turns of the first phase output coils W1 for the teeth T1, T2, T6 to T8, T12 are set to the respective numbers illustrated by hollow bars in FIG. 5A based on the positions of the teeth with respect to the electrical angle of the rotor 1, according to the first sine function f1. Accordingly, as illustrated in FIG. 5B, the distribution of the numbers of turns of the first phase output coils W1 for the teeth T1, T2, T6 to T8, T12 is a sinusoidal distribution with respect to the electrical angle of the rotor 1.

Similarly, the numbers of turns of the second phase output coils W2 are set to the respective numbers illustrated by hatched bars in FIG. 5A based on the positions of the teeth T3 to T5, T9 to T11 with respect to the electrical angle of the rotor 1, according to the fourth sine function f4.

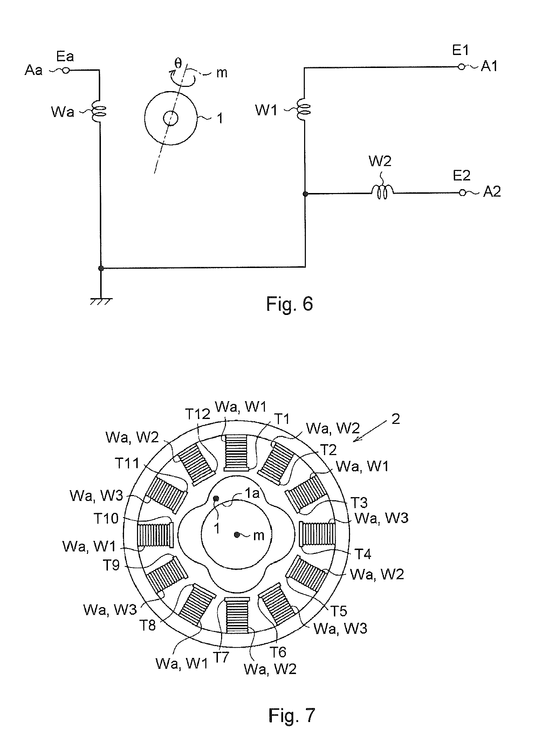

Next, description will be provided on the electrical configuration of the VR resolver according to the present embodiment and an example of the operation of the VR resolver with reference to FIG. 6. As illustrated in FIG. 6, in the VR resolver as well, when the rotor 1 rotates, the gap between the rotor 1 and each of the teeth T1 to T12 periodically changes. As a result, in each of the first and second phase output coils W1, W2, a voltage of which the amplitude component periodically changes according to the electrical angle 8 of the rotor 1 is induced. Further, the magnitude of the voltage induced in each of the first and second phase output coils W1, W2 is proportional to the number of turns of the coil. In view of this, if the numbers of turns of the first and second phase output coils W1, W2 are set as illustrated in FIG. 5A, first and second voltage signals E1, E2 as described in (e1) and (e2) below are output from output terminals A1, A2, respectively.

$$(e1)\ E1 = K \cdot Ea \cdot \sin\theta$$
$$= (K \cdot E \cdot \sin\theta) \cdot \sin(\omega t)$$

$$(e2)\ E2 = K \cdot Ea \cdot \sin(\theta - 90°)$$
$$= (K \cdot E \cdot \sin(\theta - 90°)) \cdot \sin(\omega t)$$

As described above, the amplitude components of the first and second voltage signals E1, E2 output from the output terminals A1, A2, respectively, change sinusoidally with one rotation of the rotor 1 in electrical angle $\theta$ used as one period of the sine wave, and exhibit waveforms of which the phases are offset from each other by 90° in electrical angle $\theta$. Therefore, as is well known, if the amplitude components of the first and second voltage signals E1, E2 output from the output terminals A1, A2 are extracted and an arc tangent value is calculated based on the amplitude components thus extracted, it is possible to obtain the electrical angle $\theta$ of the rotor 1 with high accuracy.

In a case where a VR resolver in which the number of output phases is set to two and the shaft angle multiplier is set to 5X is manufactured based on the structure of the VR resolver described in JP 2010-216844 A, it is necessary to form twenty teeth in the stator as described above.

However, in the VR resolver according to the present embodiment, it is possible to set the number of teeth to twelve as illustrated in FIG. 4 while setting the number of output phases to two and setting the shaft angle multiplier to 5X. Therefore, it is possible to significantly reduce the number of teeth. This makes it possible to easily manufacture the stator 2.

In the present embodiment as well, as illustrated in FIG. 4, the winding positions of the first phase output coils W1 and the winding positions of the second phase output coils W2 are each dispersed in the circumferential direction of the rotor 1. Therefore, even if the central axis of the rotor 1 and the central axis of the stator 2 are offset from each other, it is possible to cancel out the variation in induced voltage depending on the positions of the teeth. As a result, the accuracy of detection of the electrical angle of the rotor 1 improves.

As described above, with the VR resolver according to the present embodiment, even when the number of output phases is set to two and the shaft angle multiplier is set to 5X, it is possible to obtain effects the same as or similar to the effects (1), (2) in the first embodiment.

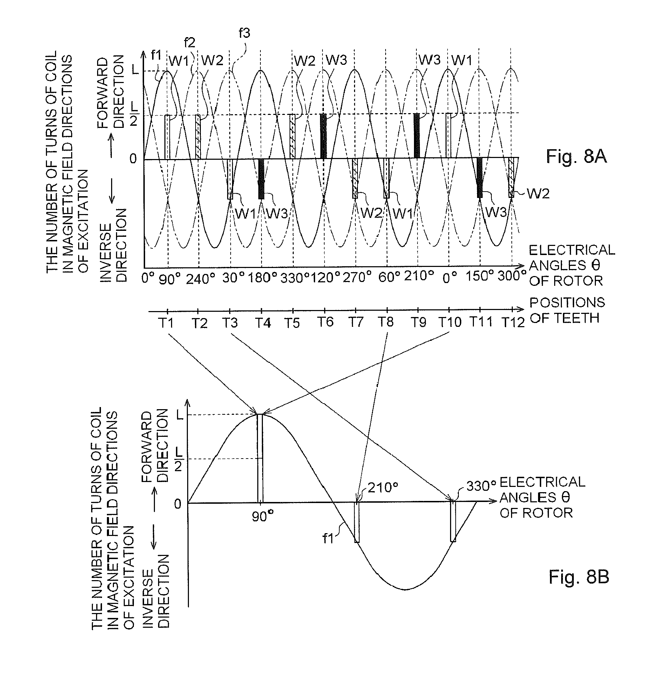

Next, description will be provided on a VR resolver of one-phase excitation and three-phase output, in which the shaft angle multiplier is set to 4X, according to a third embodiment of the invention, with reference to FIG. 7 and FIGS. 8A, 8B. The differences from the first embodiment will be mainly described below.

As illustrated in FIG. 7, in the VR resolver according to the present embodiment, in order to set the shaft angle multiplier to 4X, four salient pole portions are formed on the outer peripheral face of the rotor 1. Further, a corresponding one of first to third phase output coils W1 to W3 is wound around each of the teeth T1 to T12, as described in (f1) to (f3) below.

(f1) The first phase output coil W1 is wound around each of the teeth T1, T3, T8, T10.

(f2) The second phase output coil W2 is wound around each of the teeth T2, T5, T7, T12.

(f3) The third phase output coil W3 is wound around each of the teeth T4, T6, T9, T11.

As described above, in the present embodiment as well, the excitation coil Wa and one of the first to third phase output coils W1 to W3 are wound around each of the teeth T1 to T12.

The numbers of turns of the first to third phase output coils W1 to W3 for the corresponding teeth T1 to T12 are set as illustrated in FIG. 8A. FIG. 8A illustrates the relation among the numbers of turns of the output coils in the magnetic field directions of excitation of the excitation coil Wa, electrical angles θ of the rotor 1, and positions of the teeth. In FIG. 8A, the ordinate axis represents the number of turns of the output coil and the abscissa axis represents the electrical angle θ of the rotor 1 and the positions of the teeth. Note that, in FIG. 8A, the first to third sine functions f1 to f3 illustrated in FIG. 2A are illustrated by a continuous line, an alternate long and short dash line, and an alternate long and two short dashes line, respectively.

In the present embodiment, as illustrated in FIG. 8A, the numbers of turns of the first phase output coils W1 for the teeth T1, T3, T8, T10 are set to the respective numbers illustrated by hollow bars in FIG. 8A based on the positions of the teeth with respect to the electrical angle of the rotor 1, according to the first sine function f1.

In this case, the number of turns of each of the first phase output coils W1 for the teeth T1, T10 of which the positions in electrical angle coincide with each other is set to "L/2". Accordingly, in the first phase output coils W1 as a whole, the distribution of the numbers of turns of the first phase output coils W1 is a sinusoidal distribution with respect to the electrical angle of the rotor 1, as illustrated in FIG. 8B.

Similarly, the numbers of turns of the second phase output coils W2 are set to the respective numbers illustrated by hatched bars in FIG. 8A based on the positions of the teeth T2, T5, T7, T12 with respect to the electrical angle of the rotor 1, according to the second sine function f2. Further, the numbers of turns of the third phase output coils W3 are set to the respective numbers illustrated by solid bars in FIG. 8A based on the positions of the teeth T4, T6, T9, T11 with respect to the electrical angle of the rotor 1, according to the third sine function f3.

Next, the operation of the VR resolver according to the present embodiment will be described. In the VR resolver in which the number of output phases is set to three and the shaft angle multiplier is set to 4X as in the present embodiment, when the numbers of turns of the first to third phase output coils W1 to W3 are set as illustrated in FIG. 8A, the first to third voltage signals E1 to E3 as described in (c1) to (c3) are output from output terminals A1 to A3, respectively. Therefore, if the amplitude components of the first to third voltage signals E1 to E3 are extracted and an arc tangent value is calculated based on the amplitude components thus extracted, it is possible to obtain the electrical angle θ of the rotor 1 with high accuracy.

In a case where a VR resolver in which the number of output phases is set to three is manufactured based on the structure of the VR resolver described in JP 2010-216844 A, it is necessary to form teeth at intervals of 60° in electrical angle of the rotor 1, as described above. In order to set the shaft angle multiplier to 4X in such a VR resolver, it is necessary to form twenty-four teeth in a stator. Therefore, manufacturing of the stator may become difficult.

However, in the VR resolver according to the present embodiment, it is possible to set the number of teeth to twelve as illustrated in FIG. 7 while setting the number of output phases to three and setting the shaft angle multiplier to 4X. Therefore, it is possible to significantly reduce the number of teeth. This makes it possible to easily manufacture the stator 2.

In the present embodiment as well, as illustrated in FIG. 7, the winding positions of the first phase output coils W1, the winding positions of the second phase output coils W2, and the winding positions of the third phase output coils W3 are each dispersed in the circumferential direction of the rotor 1. Therefore, even if the central axis of the rotor 1 and the central axis of the stator 2 are offset from each other, it is possible to cancel out the variation in induced voltage depending on the positions of the teeth. As a result, the accuracy of detection of the electrical angle of the rotor 1 improves.

As described above, with the VR resolver according to the present embodiment, even when the number of output phases is set to three and the shaft angle multiplier is set to 4X, it is possible to obtain effects the same as or similar to the effects (1), (2) in the first embodiment. In addition, the following effects are obtained.

(3) When one phase output coils, among the first to third phase output coils W1 to W3, are wound around the teeth of which the positions in electrical angle of the rotor 1 coincide with each other, among the teeth T1 to T12, the distribution of the numbers of turns of the one phase output coils for these teeth is set based on the sum of the numbers of turns of the one phase output coils for these teeth. In this way, even if there are multiple teeth of which the positions in electrical angle of the rotor 1 coincide with each other, it is possible to appropriately obtain the electrical angle of the rotor 1 based on the voltage signals E1 to E3 output from the first to third phase output coils W1 to W3, respectively.

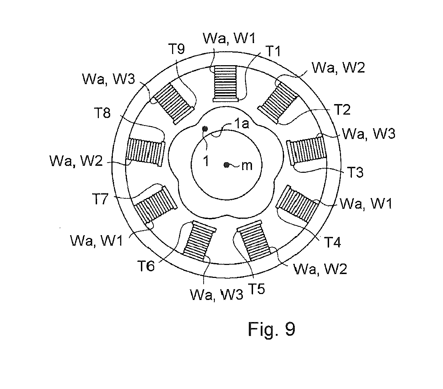

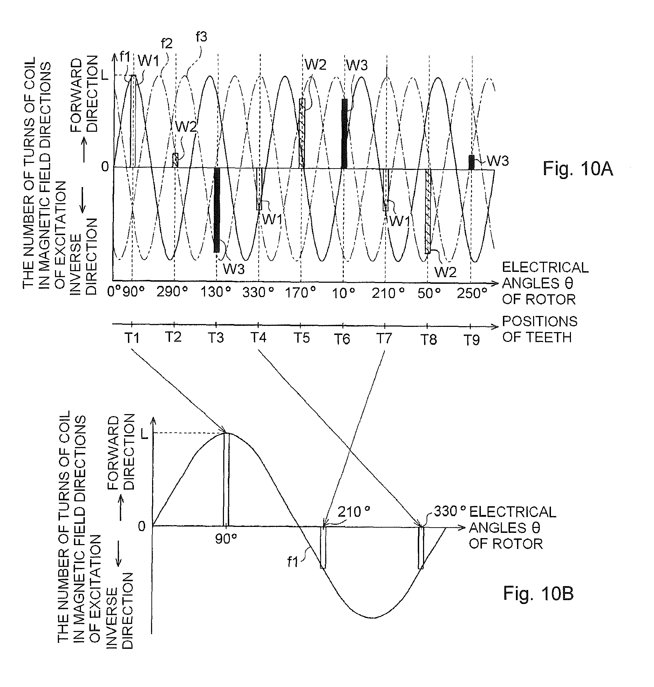

Next, description will be provided on a VR resolver of one- phase excitation and three- phase output, in which the shaft angle multiplier is set to 5X, according to a fourth embodiment of the invention, with reference to FIG. 9 and FIGS. 10A, 10B. The differences from the first embodiment will be mainly described below.

As illustrated in FIG. 9, in the VR resolver according to the present embodiment, the stator 2 is provided with nine teeth T1 to T9 that are sequentially arranged equiangularly in the circumferential direction. That is, the teeth T1 to T9 are arranged at intervals of 40° in mechanical angle of the rotor 1, in other words, at intervals of 200° in electrical angle of the rotor 1. A corresponding one of first to third phase output coils W1 to W3 is wound around each of the teeth T1 to T9 as described in (g1) to (g3) below.

(g1) The first phase output coil W1 is wound around each of the teeth T1, T4, T7.
(g2) The second phase output coil W2 is wound around each of the teeth T2, T5, T8.
(g3) The third phase output coil W3 is wound around each of the teeth T3, T6, T9.

As described above, in the present embodiment as well, the excitation coil Wa and one of the first to third phase output coils W1 to W3 are wound around each of the teeth T1 to T9. The numbers of turns of the first to third phase output coils W1 to W3 for the corresponding teeth T1 to T9 are set as illustrated in FIG. 10A. FIG. 10A illustrates the relation among the numbers of turns of the output coils in the magnetic field directions of excitation of the excitation coil Wa, electrical angles θ of the rotor 1, and positions of the teeth. In FIG. 10A, the ordinate axis represents the number of turns of the output coil and the abscissa axis represents the electrical angle 0 of the rotor 1 and the positions of the teeth. Note that, in FIG. 10A, the first to third sine functions f1 to f3 illustrated in FIG. 2A are illustrated by a continuous line, an alternate long and short dash line, and an alternate long and two short dashes line, respectively.

In the present embodiment, as illustrated in FIG. 10A, the numbers of turns of the first phase output coils W1 for the teeth T1, T4, T7 are set to the respective numbers illustrated by hollow bars in FIG. 10A based on the positions of the teeth with respect to the electrical angle of the rotor 1, according to the first sine function f1. Thus, the distribution of the numbers of turns of the first phase output coils W1 for the teeth T1, T4, T7 is a sinusoidal distribution with respect to the electrical angle of the rotor 1.

Similarly, the numbers of turns of the second phase output coils W2 are set to the respective numbers illustrated by hatched bars in FIG. 10A based on the positions of the teeth T2, T5, T8 with respect to the electrical angle of the rotor 1, according to the second sine function f2. Further, the numbers of turns of the third phase output coils W3 are set to the respective numbers illustrated by solid bars in FIG. 10A based on the positions of the teeth T3, T6, T9 with respect to the electrical angle of the rotor 1, according to the third sine function f3.

Next, the operation of the VR resolver according to the present embodiment will be described. As in the present embodiment, even when the number of teeth of the stator 2 is set to nine, if the numbers of turns of the first to third phase output coils W1 to W3 are set as illustrated in FIG. 10A, the first to third voltage signals E1 to E3 as described in (c1) to (c3) are output from output terminals A1 to A3, respectively. Therefore, if the amplitude components of the first to third voltage signals E1 to E3 are extracted and an arc tangent value is calculated based on the amplitude components thus extracted, it is possible to obtain the electrical angle 0 of the rotor 1 with high accuracy. Therefore, it is possible to further reduce the number of teeth of the stator 2. This makes it possible to easily manufacture the stator 2.

As described above, with the VR resolver according to the present embodiment, even when the number of teeth of the stator is set to nine, it is possible to obtain effects the same as or similar to the effects (1), (2) in the first embodiment.

Note that each of the above-described embodiments may be modified as below.

In the first embodiment, a corresponding one of the first to third phase output coils W1 to W3 is wound around each of the teeth T1 to T12 as described in (a1) to (a4) above. However, the winding positions of the respective phase output coils may be modified as needed. For example, the first to third phase output coils W1 to W3 may be wound around the teeth T1 to T12 as described (h1) to (h3) below.

(h1) The first phase output coil W1 is wound around each of the teeth T1 to T4.
(h2) The second phase output coil W2 is wound around each of the teeth T5 to T8.
(h3) The third phase output coil W3 is wound around each of the teeth T9 to T12.

Even if the winding positions of each phase output coils, among the first to third phase output coils W1 to W3 for the teeth T1 to T12, are concentrated as described above, it is possible to obtain the effect (1) in the first embodiment. In the second to fourth embodiments as well, the winding positions of each phase output coils may be modified as needed.

In the third embodiment, the number of turns of each of the first phase output coils W1 for the teeth T1, T10 is set to "L/2". However, as long as the sum of the numbers of turns of the first phase output coils W1 for the teeth T1, T10 is "L", the respective numbers of turns of the first phase output coils W1 for the teeth T1, T10 may be modified as needed.

In each of the embodiments, the shaft angle multiplier is set to 4X or 5X. However, the shaft angle multiplier may be modified as needed as long as the shaft angle multiplier is 2X or more.

In each of the embodiments, the invention is applied to a VR resolver in which the stator 2 is provided with nine or twelve teeth. However, the invention may be applied to any VR resolver that includes a stator having three or more teeth for one phase output coils. The reason is as follows: in a case where the stator has three or more teeth for one phase output coils, if the numbers of turns of each phase output coils for the corresponding teeth are adjusted as needed, it is possible to set the distribution of the numbers of turns of each phase output coils for the corresponding teeth to a sinusoidal distribution with respect to the electrical angle of the rotor 1. Therefore, the invention is applicable to a VR resolver of two-phase output, as long as the stator 2 has six or more teeth. Further, the invention is applicable to a VR resolver of three-phase output, as long as the stator 2 has nine or more teeth.

In each of the embodiments, multiple teeth are formed in the stator 2 equiangularly. However, multiple teeth may be arranged at unequal angular intervals.

The invention is applicable to various resolvers other than VR resolvers.

### Claims

1. A resolver including a stator that surrounds a rotor and that is provided with a plurality of teeth, and multiple phase output coils that are wound around the teeth, the resolver being configured such that voltages induced in the respective phase output coils change due to changes in magnetic fluxes applied to the multiple phase output coils based on rotation of the rotor, voltage signals corresponding to an electrical angle of the rotor are output from the multiple phase output coils, and a shaft angle multiplier is set to 2X or more, **characterized in that**:

   one of the multiple phase output coils is wound around each of the teeth; and
   with respect to each of the phases, a distribution of the numbers of turns of each phase output coils for the corresponding teeth is a sinusoidal distribution with respect to the electrical angle of the rotor.

2. The resolver according to claim 1, wherein, with respect to each of the phases, winding positions of each phase output coils for the corresponding teeth are dispersed in a circumferential direction of the rotor.

3. The resolver according to claim 1 or 2, wherein, when one phase output coils, among the multiple phase output coils, are wound around the teeth of which positions in electrical angle of the rotor coincide with each other, the distribution of the numbers of turns of the one phase output coils for the teeth of which the positions in electrical angle coincide with each other is set based on a sum of the numbers of turns of the one phase output coils for the teeth.

Fig. 1

Fig. 2A

Fig. 2B

Fig. 3

Fig. 4

Fig. 5A

Fig. 5B

Fig. 6

Fig. 7

Fig. 8A

Fig. 8B

Fig. 9

Fig. 10A

Fig. 10B

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010216844 A